# EUROPÄISCHE PATENTSCHRIFT

(11) **EP 2 852 522 B1**
(45) Veröffentlichungstag und Bekanntmachung des Hinweises auf die Patenterteilung: **26.10.2016**
(21) Anmeldenummer: 13714594.2
(22) Anmeldetag: 26.03.2013
(51) Int. Cl.: B62K 17/00, B62J 27/00, B62D 37/06

(54) **VORRICHTUNG UND VERFAHREN ZUM AUSÜBEN VON DREHMOMENT AUF EIN OBJEKT**
APPARATUS AND METHOD FOR SUBJECTING AN OBJECT TO TORQUE
DISPOSITIF ET PROCÉDÉ DESTINÉS À EXERCER UN COUPLE SUR UN OBJET

(30) Priorität: 23.05.2012 DE 102012208623
(43) Veröffentlichungstag der Anmeldung: 01.04.2015
(73) Patentinhaber: Robert Bosch GmbH, 70442 Stuttgart (DE)
(72) Erfinder: SCHMITT, Michael, I-70026 Modugno (IT); CARLE, Wolfgang, 72770 Ohmenhausen (DE)
(86) Internationale Anmeldenummer: PCT/EP2013/056387
(87) Internationale Veröffentlichungsnummer: WO 2013/174550

(56) Entgegenhaltungen:
- WO-A1-2011/115699
- WO-A2-2006/004581
- DE-A1- 4 112 447
- FR-A1- 2 693 970
- GB-A- 190 327 212
- JP-A- H11 116 181
- US-A- 3 424 401

## Beschreibung

### Stand der Technik

Die Erfindung betrifft eine Vorrichtung und ein Verfahren zum Ausüben von Drehmoment auf ein Objekt. Die Erfindung betrifft außerdem auch ein Fahrzeug mit einer solchen Vorrichtung und die Verwendung einer Vorrichtung zum Ausüben von Drehmoment auf ein Fahrzeug.

Gängige Kraftfahrzeuge, wie z. B. PKW, sind in der Regel mit einer Fahrdynamikregelung ausgestattet, die in einer kritischen Fahrsituation - also beispielsweise bei hohem Radschlupf - automatisch ins Fahrgeschehen eingreift und Maßnahmen zur Stabilisierung des Fahrzeugs einleitet. Hierzu werden in der Regel Brems- oder Beschleunigungskräfte auf das Fahrzeug ausgeübt, zum Beispiel indem gezielt einzelne Räder abgebremst oder beschleunigt werden. Bekannte Fahrdynamikregelungen dienen dazu, das Fahrzeug zu stabilisieren, aber auch dazu, das Fahrzeug aus einer kritischen Fahrsituation in eine stabile Fahrsituation zurückzuführen.

Bei vierrädrigen Fahrzeugen funktionieren bekannte Fahrdynamikregler in den meisten Fahrsituationen hinreichend gut. Bei zweirädrigen Fahrzeugen sind die bekannten Fahrdynamikregelungen hingegen nicht in der Lage, das Fahrzeug ausreichend zu stabilisieren oder aus einer kritischen Fahrsituation in eine stabile Fahrsituation zurückzuführen. Eine der Ursachen hierfür liegt darin, dass auf das Motorrad hohe Drehmomente wirken können, denen - anders als bei PKWs - mittels Brems- oder Lenkeingriffen nicht oder nur unzureichend entgegengewirkt werden kann.

Aus der FR2693970 ist eine Vorrichtung zum Ausüben von Drehmoment auf ein Objekt mit den Merkmalen des Oberbegriffes des Anspruchs 1 bekannt.

Druckschrift DE 41 12 447 A1 offenbart ein Verfahren zur Stabilisierung eines Motorrads mittels eines gyroskopisch wirkenden Schwungrads. Mittels des Schwungrads lässt sich jedoch nur unzureichend auf das Zweirad einwirken.

Vorrichtungen zum Ausüben von Drehmoment auf ein Objekt sind beispielsweise auch aus der GB 27212 A A.D., aus der WO 2011/115699 A1, aus der WO 2006/004581 A2, aus der US 3,424,401 A, aus der JPH 11 116181 A oder aus der DE 41 12 447 A1 bekannt.

Neben Fahrzeugen können auch andere Vorrichtungen, wie etwa Maschinen mit bewegten Teilen, wie z. B. Bohrmaschinen, Roboter, Fitnessgeräte, etc. Betriebszustände aufweisen, in denen relativ hohe Drehmomente wirken. Solche Drehmomente treten üblicherweise beim Beschleunigen (oder Bremsen) der Vorrichtung oder eines Teils davon auf, wie z. B. beim Hochlaufen einer Bohrmaschine oder beim Beschleunigen eines Roboterarms. In diesem Fall wirkt der Drehimpuls des beschleunigten Teils auf die gesamte Einrichtung zurück. Dies ist oftmals nicht erwünscht, da die Rückwirkung des Drehmoments die Funktion oder Bedienbarkeit der Vorrichtung beeinträchtigt.

### Offenbarung der Erfindung

Es ist daher die Aufgabe der vorliegenden Erfindung, eine Vorrichtung und ein Verfahren zu schaffen, mit welcher eine Bewegung und/oder die Lage eines Objekts schnell und effizient stabilisiert werden kann. Darüber hinaus soll auch ein Fahrzeug, insbesondere ein Zweiradfahrzeug, geschaffen werden, das einfach und effektiv stabilisiert werden kann.

Gelöst wird diese Aufgabe gemäß der Erfindung durch die in den Patentansprüchen 1 und 5 bis 7 angegebenen Merkmale. Weitere Ausgestaltungen der Erfindung ergeben sich aus den Unteransprüchen.

Gemäß der Erfindung wird eine Vorrichtung zum Ausüben von Drehmoment auf ein Objekt vorgeschlagen, mit wenigstens einer um eine Drehachse drehbar gelagerten Schwungmasse und einem Antrieb zum Antreiben der Schwungmasse sowie einem Lagermittel zum Lagern der drehbar gelagerten Schwungmasse am Objekt. Gemäß der Erfindung ist außerdem ein am Lagermittel angreifendes Kopplungsmittel vorgesehen, mittels dessen die Schwungmasse wahlweise mit dem Objekt gekoppelt oder vom Objekt entkoppelt werden kann. Im entkoppelten Zustand kann die Drehachse der Schwungmasse ihre Lage zumindest entlang einer vorgegeben Bahn verändern, ohne dass eine nennenswerte Kraft - abgesehen von Reibungskräften - auf das Objekt übertragen wird. Im gekoppelten Zustand sind die Schwungmasse und das Objekt dagegen mechanisch verbunden, so dass eine Momentenübertragung von der Schwungmasse auf das Objekt (und umgekehrt) stattfinden kann. In diesem Zustand ist es daher möglich, ein gezieltes Drehmoment auf das Objekt auszuüben, um die Bewegung oder die Lage des Objekts zu stabilisieren.

Die Drehachse der Schwungmasse kann, beispielsweise bei einem Schwungrad, eine innere Drehachse, oder, beispielsweise bei einer sich auf einer Kreisbahn bewegenden Masse, eine äußere Drehachse sein.

Je nach Ausführung des Lagermittels kann sich die Lage der Drehachse der Schwungmasse beispielsweise in einem Teilbereich einer Ebene, einer gesamten Ebene, einem Teilbereich des dreidimensionalen Raumes oder innerhalb des gesamten dreidimensionalen Raumes relativ zum Objekt verändern.

Erfindungsgemäß umfasst das Lagermittel eine kardanische Aufhängung. Diese ermöglicht, dass die Drehachse im dreidimensionalen Raum eine beliebige Ausrichtung relativ zum Objekt einnehmen kann.

Das Kopplungsmittel ist gemäß der Erfindung dazu ausgebildet, das Lagermittel wahlweise freigeben oder feststellen zu können. Wenn die Schwungmasse mit dem Objekt gekoppelt ist, erzeugt eine Änderung des Drehimpulses der Schwungmasse - was per Definition durch eine Ausübung eines Drehmoments bewirkt wird - ein auf das Objekt wirkendes Gegenmoment. Im entkoppelten Zustand wird im Wesentlichen keine Kraft übertragen.

Eine Drehimpulsänderung der Schwungmasse kann im Prinzip auf zwei Arten erreicht werden: zum einen kann die Rotations- bzw. Drehbewegung der Schwungmasse beschleunigt werden (mit positivem als auch negativem Vorzeichen). Zum anderen kann auch die Lage der Drehachse verändert werden. Beide Maßnahmen erzeugen eine Drehimpulsänderung, die sich im gekoppelten Zustand auf das Objekt überträgt.

Gemäß einer Ausführungsform der Erfindung ist eine Bremse vorgesehen, mit der die wenigstens eine Schwungmasse gezielt gebremst werden kann. Als Bremse kann z.B. auch ein Elektromotor eingesetzt werden, der im generatorischen Betrieb betrieben wird. Zum Beschleunigen der Drehbewegung der Schwungmasse kann ebenfalls ein Elektromotor vorgesehen sein.

Um die Lage der Drehachse zu verändern, kann ein Antrieb mit einem Elektromotor order ein anderer, z. B. ein rein mechanischer, Antrieb vorgesehen sein. Wird die Drehachse mittels des Antriebs verändert, verändert sich per Definition auch der Drehimpuls der Schwungmasse, so dass wiederum ein auf das Objekt einwirkendes Gegenmoment erzeugt wird. Der Antrieb kann z. B. am Lagermittel angreifen und dieses verstellen.

Bei einer Änderung der Lage der Drehachse kann der Drehimpuls der Schwungmasse z. B. betragsmäßig konstant gehalten werden (vektoriell ändert er sich), beispielsweise mittels eines Antriebs und/oder einer Bremse. Es lässt sich dadurch ein Drehmoment auf das Objekt übertragen, ohne dass übermäßig kinetische Energie an der Schwungmasse auf- oder abgebaut wird. Zur Stabilisierung wird dabei der gyroskopische Effekt genutzt.

Erfindungsgemäß sind sechs Schwungmassen vorgesehen, die in einem Körper zusammengefasst sind, der kardanisch am Objekt aufgehängt ist. Jeweils zwei Schwungmassen drehen sich dabei um dieselbe Drehachse, aber in gegenläufige Richtungen. Die Drehachsen der drei Paare von Schwungmassen stehen vorzugsweise weitgehend senkrecht zueinander. Durch gezieltes Beschleunigen oder Bremsen einzelner oder mehrerer der Schwungmassen, oder durch Veränderung der Ausrichtung der Drehachsen kann eine beliebige Gesamtdrehimpulsänderung des Körpers bewirkt werden, die sich dann auf das Objekt übertragen lässt.

Neben der beschriebenen Vorrichtung umfasst die Erfindung auch ein Fahrzeug mit einer erfindungsgemäßen Vorrichtung. Auch eine Verwendung einer erfindungsgemäßen Vorrichtung zum Ausüben von Drehmoment auf ein Fahrzeug, insbesondere ein Zweirad, ist Gegenstand der Erfindung. Ein mit einer erfindungsgemäßen Vorrichtung bestücktes Fahrzeug kann relativ schnell und effizient stabilisiert oder aus einer instabilen in eine stabile Fahrsituation zurückgeführt werden.

Schließlich ist auch ein Verfahren zum Ausüben von Drehmoment auf ein Objekt Gegenstand der Erfindung. Gemäß der Erfindung wird vorgeschlagen, zunächst Daten über einen Stabilitätszustand des Objekts mittels wenigstens eines Sensors zu erfassen und aus den erfassten Daten zu ermitteln, ob der Stabilitätszustand als kritisch einzustufen ist. Wenn der Stabilitätszustand eine vorgegebene Bedingung erfüllt, wird ein auf das Objekt zu übertragendes Moment ermittelt und dieses Moment auf wenigstens eine der Schwungmassen ausgeübt. Zuvor wird noch das Kopplungsmittel betätigt und dadurch die wenigstens eine Schwungmasse mit dem Objekt verkoppelt, so dass eine Momentenübertragung stattfinden kann.

Gemäß einer bevorzugten Ausführungsform des erfindungsgemäßen Verfahrens wird das Lagermittel, wenn der Stabilitätszustand als kritisch eingestuft wurde, festgestellt und wenigstens eine Schwungmasse abgebremst oder beschleunigt.

Gemäß einer anderen Ausführungsform des erfindungsgemäßen Verfahrens wird die Lage der Drehachse verändert. Die Drehzahl einer Drehbewegung der Schwungmasse kann dabei gegebenenfalls konstant gehalten werden.

Wird das erfindungsgemäße Verfahren zum Ausüben von Drehmoment auf ein Fahrzeug angewandt, werden als Daten zum Stabilitätszustand vorzugsweise mindestens eine Beschleunigung und/oder eine Drehrate erfasst. Hierzu wird zum Beispiel ein Beschleunigungs- oder Drehratensensor eingesetzt.

Die Erfindung wird nachstehend anhand der beigefügten Zeichnungen beispielhaft näher erläutert. Es zeigen:
- Fig. 1: eine perspektivische Darstellung einer erfindungsgemäßen Vorrichtung zum Ausüben von Drehmoment auf ein Objekt;
- Fig. 2: eine perspektivische Darstellung eines Körpers mit sechs Schwungmassen, der Teil der erfindungsgemäßen Vorrichtung ist;
- Fig. 3a: ein Blockschaltbild einer ersten Ausführungsform eines Verfahrens zum Ausüben von Drehmoment auf ein Objekt; und
- Fig. 3b: ein Blockschaltbild einer zweiten Ausführungsform eines Verfahrens zum Ausüben von Drehmoment auf ein Objekt.

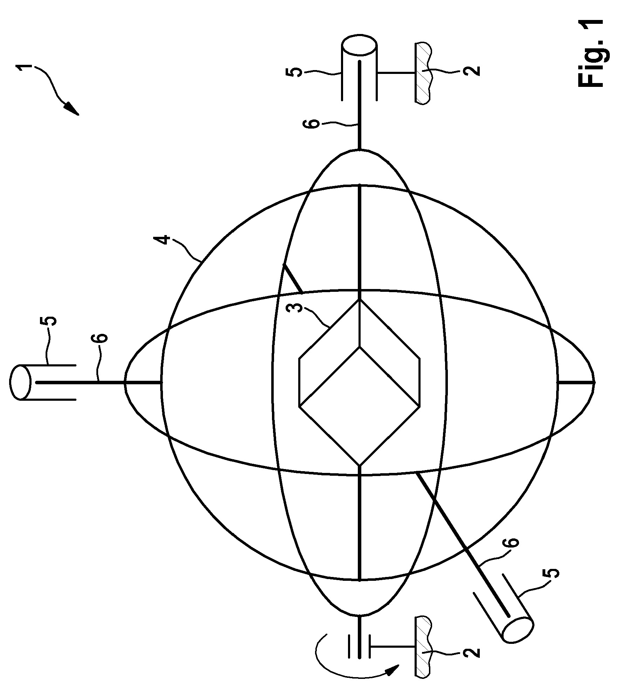

Fig. 1 zeigt eine erfindungsgemäße Vorrichtung 1 zum Ausüben von Drehmoment auf ein Objekt 2 in perspektivischer Darstellung. Die Vorrichtung 1 ist dabei an dem Objekt 2, im vorliegenden Fall einem Motorrad, befestigt. In Fig. 1 sind allerdings nur die unmittelbar an die Befestigung grenzenden Abschnitte des Motorrads schematisch dargestellt.

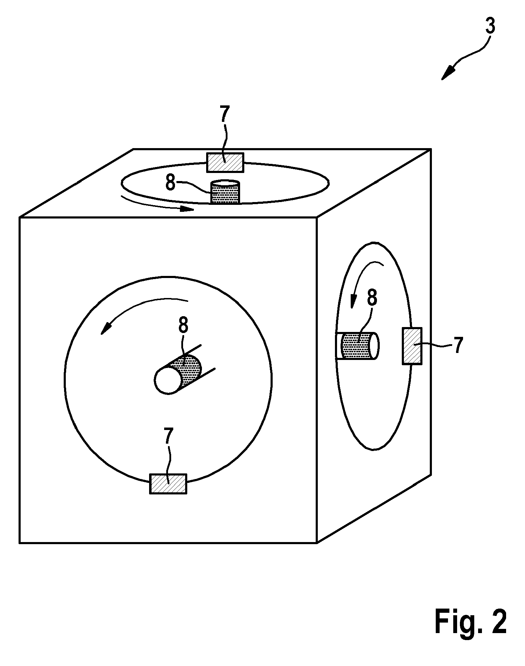

Die Vorrichtung 1 weist einen würfelförmigen und in Fig. 2 näher dargestellten Körper 3 mit sechs drehbar gelagerten Schwungmassen 7, ein Lagermittel 4 und ein Kopplungsmittel 5 auf. Der Körper 3 ist dazu vorgesehen, Drehimpuls aufzubauen, abzubauen oder zu speichern. Hierzu werden die Schwungmassen 7 des Körpers 3 zunächst in Drehbewegung versetzt und die Drehbewegung dann aufrecht erhalten, beschleunigt oder abgebremst. Wahlweise kann auch die Lage des Körpers 3 und damit der Drehachsen 8 verändert werden, wodurch sich wiederum der Gesamt-Drehimpuls des Körpers 3 ändert.

Der Körper 3 ist mittels eines Lagermittels 4 - hier eine kardanische Aufhängung - am Motorrad 2 gelagert. Mit Hilfe des Kopplungsmittels 5 lässt sich der Körper 3 mit dem Motorrad 2 koppeln oder entkoppeln. Die erfindungsgemäße Vorrichtung 1 kann wenigstens zwei verschiedene Zustände einnehmen: einen entkoppelten Zustand, in dem der Körper 3 vom Motorrad 2 entkoppelt ist, und einen gekoppelten Zustand, in welchem der Körper 3 mit dem Motorrad 2 gekoppelt ist. Im entkoppelten Zustand (Normalzustand) kann sich der Körper 3 - und somit die Drehachsen 8 der Schwungmassen 7 - relativ zum Motorrad frei ausrichten. Zwischen Körper 3 und Motorrad 2 können im Wesentlichen keine Kräfte übertragen werden (bis auf die Reibungskräfte des Lagermittels 4). Im gekoppelten Zustand kann dagegen ein Moment vom Körper 3 auf das Motorrad (und umgekehrt) übertragen werden. Es ist somit möglich, gezielt auf das Motorrad 2 einzuwirken.

Zum Koppeln des Körpers 3 mit dem Motorrad 2 lassen sich die Lager, mit denen die Achsen 6 der drei Ringe der kardanischen Aufhängung 4 gelagert sind, feststellen. Die Position der einzelnen Ringe der kardanischen Aufhängung ist dabei mittels eines Antriebs (nicht dargestellt) veränderbar. Es besteht somit die Möglichkeit einer Kraftübertragung zwischen Körper 3 und Motorrad 2. Darüber hinaus kann auch die Lage der Achsen 6 verstellt werden. Somit kann durch eine Änderung der Lage der Achsen 6 ein Drehimpuls auf das Motorrad 2 übertragen werden.

Der Körper 3 ist in der Fig. 2 näher dargestellt. Er weist drei Paare einander gegenüberliegender und um Drehachsen 8 drehbar gelagerter Schwungmassen 7 auf, von denen jedoch nur drei in Fig. 2 gezeigt sind. Die Schwungmassen 7 lassen sich mittels eines nicht näher dargestellten Antriebs auf Kreisbahnen beschleunigen, wobei sich gegenüberliegende Schwungmassen 7, die sich um dieselbe Drehachse 8 drehen, jeweils in gegenteilige Richtungen beschleunigt werden. Somit lässt sich Drehimpuls in dem Körper 3 aufbauen. Wird der im Körper 3 gespeicherte Drehimpuls verändert, indem ein Drehmoment auf die Schwungmassen 7 übertragen wird, so löst dies nach dem Wechselwirkungsprinzip ein Gegenmoment aus, welches im gekoppelten Zustand auf das Motorrad 2 übertragen wird. Es lässt sich somit mittels der Vorrichtung 1 ein Drehmoment auf das Motorrad 2 übertragen.

Bei der dargestellten Vorrichtung 1 bestehen mehrere Möglichkeiten, eine Drehimpulsänderung an den Schwungmassen 7 des Körpers 3 herbeizuführen und damit ein Gegenmoment auf das Motorrad 2 zu übertragen. Zum einen kann mittels eines nicht näher dargestellten Antriebs - z. B. eines Elektromotors - oder einer ebenfalls nicht näher dargestellten Bremse auf eine oder mehrere der Schwungmassen 7 eingewirkt werden. Die Schwungmassen 7 werden dabei gebremst oder beschleunigt. Auf diese Weise wird das Drehmoment einer oder mehreren Schwungmassen 7 verändert, und das entsprechende Gegenmoment wird auf das Motorrad 2 übertragen.

Eine andere Möglichkeit, mit der dargestellten Vorrichtung 7 ein Gegenmoment auf das Motorrad 2 zu übertragen, besteht darin, die Lage des Körpers 3 im Raum mittels des Kopplungsmittels 5 zu ändern. Die Drehzahlen der Schwungmassen 7 können dabei mittels des Elektromotors bzw. der Bremse im Körper 3 konstant gehalten werden. Auch auf diese Weise wird der Drehimpuls im Körper 3 verändert. Da die Drehzahlen der einzelnen Schwungmassen 7 konstant gehalten werden, bleibt der Gesamtdrehimpuls betragsmäßig glich, es ändert sich jedoch die Richtung des Drehimpulses. Hierzu muss ein Moment auf den Körper 3 ausgeübt werden, das wiederum auf das Motorrad 2 zurück wirkt.

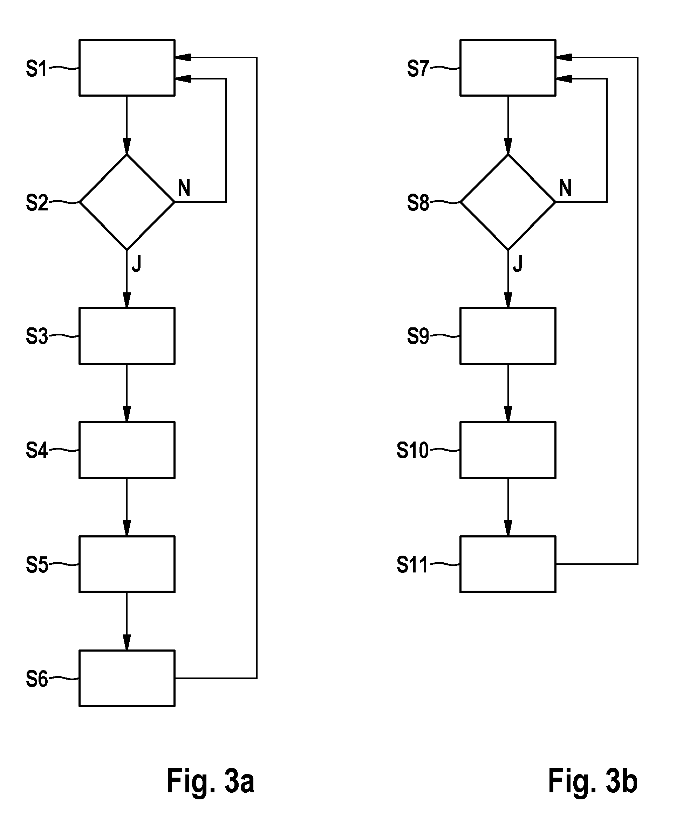

In den Fig. 3a und 3b sind Blockschaltbilder von zwei unterschiedlichen Ausführungsformen des erfindungsgemäßen Verfahrens zum Übertragen von Drehmoment auf ein Objekt gezeigt. Bei dem Objekt handelt es sich z. B. um ein Motorrad 2. Beiden Ausführungsformen ist gemeinsam, dass zunächst überwacht und beurteilt wird, ob und zu welchem Zeitpunkt Drehmoment auf das Motorrad 2 ausgeübt werden soll.

Nach der in Fig. 3a im Blockschaltbild dargestellten Ausführungsform werden in einem ersten Schritt S1 Daten über den Fahrzustand des Motorrads 2 erfasst. Im vorliegenden Fall werden als Daten Beschleunigungswerte, Drehrate, Lenkwinkel und Raddrehzahlen erfasst. Hierzu werden Beschleunigungssensoren, Drehratensensoren, Lenkwinkelsensoren und Raddrehzahlsensoren eingesetzt.

In einem weiteren Verfahrensschritt S2 wird überprüft, ob der Fahrzustand als kritisch zu beurteilen ist. Ein Fahrzustand gilt beispielsweise dann als kritisch, wenn die Beschleunigungs- oder Drehratenwerte vorgegebene Schwellenwerte überschreiten. Hohe Beschleunigungs- bzw. Drehratenwerte können beispielsweise auf ein Schlingern des Motorrads 2 oder ein Ausbrechen des Hinterrads hindeuten. In diesem Fall wird mittels des erfindungsgemäßen Verfahrens ein Drehmoment auf das Motorrad 2 ausgeübt, welches das Motorrad stabilisieren und in eine stabile Fahrsituation zurückführen soll.

Wird im zweiten Schritt S2 des Verfahrens festgestellt, dass der Fahrzustand nicht als kritisch einzustufen ist, wird zum Schritt S1 zurückgekehrt, und der Schritt S1 wird erneut durchlaufen.

Wird der Fahrzustand im Schritt S2 als kritisch beurteilt, wird in Schritt S3 ein auf das Motorrad 2 zu übertragendes Drehmoment ermittelt. Das Drehmoment kann beispielsweise aus einer Kennlinie ausgelesen werden oder aus den Daten über den Fahrzustand berechnet werden.

In einem vierten Verfahrensschritt S4 wird dann ein Moment berechnet, welches auf die Schwungmassen 7 der Vorrichtung 1 ausgeübt werden muss, um das zuvor berechnete Drehmoment zu bewirken.

In einem fünften Schritt S5 wird das Lagermittel 4 festgestellt, so dass eine Momentenübertragung auf das Motorrad 2 möglich ist.

In einem sechsten Schritt S6 werden die Schwungmassen 7 so beschleunigt oder gebremst, dass das gewünschte Gegenmoment erzeugt und auf das Motorrad 2 ausgeübt wird. Sobald sich das Motorrad wieder stabilisiert hat und die Drehzahlen der Schwungmassen langsam wieder auf den Nominalwert beschleunigt bzw. abgebremst und die Feststellung des Lagermittels 5 gelöst wurde, wird zum Verfahrensschritt S1 zurückgekehrt.

Bei der in Fig. 3b dargestellten Ausführungsform verlaufen die Verfahrensschritte S7-S10 identisch mit den Schritten S1-S4 des in Fig. 3a dargestellten Verfahrens. In einem weiteren Verfahrensschritt S11 wird aber der Drehimpuls betragsmäßig konstant gehalten, indem die Schwungmassen 7 beschleunigt bzw. gebremst werden, und das Lagermittel 4 wird mittels des Kopplungsmittels 5 in eine gewünschte Richtung gedreht. Dadurch wird das in Schritt S10 ermittelte Gegenmoment auf das Motorrad 2 übertragen. Ist die Fahrsituation des Motorrads 2 wieder stabilisiert, so wird das Kopplungsmittel 5 wieder auf Freilauf geschalten. Dadurch liegen keine Momente mehr am Motorrad 2 an.

## Patentansprüche

1. Vorrichtung zum Ausüben von Drehmoment auf ein Objekt (2) mit wenigstens einer um eine Drehachse (8) drehbar gelagerten Schwungmasse (7) und einem Antrieb zum Antreiben der Schwungmasse (7) sowie einem Lagermittel (4) zum Lagern der Schwungmasse am Objekt (2), das eine Veränderung der Ausrichtung der Drehachse (8) relativ zum Objekt (2) erlaubt, wobei ein am Lagermittel (4) angreifendes Kopplungsmittel (5) vorgesehen ist, mittels dessen die wenigstens eine drehbar gelagerte Schwungmasse (7) wahlweise mit dem Objekt (2) gekoppelt oder vom Objekt (2) entkoppelt werden kann, **dadurch gekennzeichnet, dass** wenigstens ein Körper (3) mit sechs Schwungmassen (7) vorgesehen ist, der mittels des Lagermittels (4) relativ zum Objekt (2) kardanisch gelagert ist, wobei jeweils zwei Schwungmassen (7) um dieselbe Drehachse (8) in gegenläufige Richtungen drehbar sind.

2. Vorrichtung nach Anspruch 1, **dadurch gekennzeichnet, dass** das Kopplungsmittel (5) zum wahlweisen Feststellen oder Freigeben des Lagermittels (4) ausgebildet ist.

3. Vorrichtung nach einem der vorstehenden Ansprüche, **dadurch gekennzeichnet, dass** das Kopplungsmittel (5) derart ausgebildet ist, dass die Lage der Drehachse (8) der Schwungmasse (7) im gekoppelten Zustand verändert werden kann.

4. Vorrichtung nach einem der vorstehenden Ansprüche, **dadurch gekennzeichnet, dass** eine Bremse vorgesehen ist, mit der eine Bremskraft auf die Schwungmasse (7) ausgeübt werden kann.

5. Fahrzeug mit einer Vorrichtung (1) nach einem der Ansprüche 1 bis 4 zum Ausüben von Drehmoment auf das Fahrzeug.

6. Verwendung einer Vorrichtung (1) nach einem der Ansprüche 1 bis 4 zum Ausüben von Drehmoment auf ein Fahrzeug zur Stabilisierung eines Fahrzustands des Fahrzeugs.

7. Verfahren zum Ausüben von Drehmoment auf ein Objekt (2) mittels einer Vorrichtung (1) nach einem der Ansprüche 1 bis 4, umfassend die folgenden Schritte:
- Erfassen (S1, S7) von Daten über einen Stabilitätszustand des Objekts mittels wenigstens eines Sensors;
- Ermitteln (S2, S8) aus den erfassten Daten, ob der Stabilitätszustand als kritisch einzustufen ist;
**gekennzeichnet durch** die folgenden Schritte:
- Ermitteln (S3, S9) eines auf das Objekt zu übertragenden Gegenmoments zur Stabilisierung des Objekts;
- Ermitteln (S4, S10) eines Moments, das auf wenigstens eine der Schwungmassen (7) ausgeübt werden soll, um das gewünschte Gegenmoment zu bewirken, und Ausüben (S6, S11) des Moments auf wenigstens eine der Schwungmassen (7), wenn der Stabilitätszustand als kritisch eingestuft wurde.

8. Verfahren nach Anspruch 7, **dadurch gekennzeichnet, dass** das Lagermittel (4) festgestellt und wenigstens eine Schwungmasse (7) abgebremst oder beschleunigt wird, wenn der Stabilitätszustand als kritisch eingestuft wurde.

9. Verfahren nach Anspruch 7 oder 8, **dadurch gekennzeichnet, dass** zur Veränderung der Ausrichtung der Drehachse (8) wenigstens einer Schwungmasse (7) die Position des Lagermittels (4) mit Hilfe eines Antriebs, am Kopplungsmittel 5, verstellt wird.

10. Verfahren nach einem der Ansprüche 7 bis 9, **dadurch gekennzeichnet, dass** das Objekt (2) ein Fahrzeug ist und als Daten über den Stabilitätszustand mindestens eine Beschleunigung und/oder eine Drehrate und/oder ein Lenkwinkel und/oder eine Raddrehzahl erfasst werden (S1, S7).

## Claims

1. Apparatus for exerting torque on an object (2), having at least one rotating mass (7) rotatably mounted about an axis of rotation (8) and a drive for driving the rotating mass (7), and also a supporting means (4) for supporting the rotating mass on the object (2), which permits a change in the alignment of the axis of rotation (8) relative to the object (2), a coupling means (5) acting on the supporting means (4) being provided, by means of which the at least one rotatably mounted rotating mass (7) can optionally be coupled to the object (2) or uncoupled from the object (2), **characterized in that** at least one body (3) having six rotating masses (7) is provided and is supported cardanically relative to the object (2) by the supporting means (4), in each case two rotating masses (7) being rotatable in opposite directions about the same axis of rotation (8).

2. Apparatus according to Claim 1, **characterized in that** the coupling means (5) is designed to optionally fix or release the supporting means (4).

3. Apparatus according to one of the preceding claims, **characterized in that** the coupling means (5) is formed in such a way that the position of the axis of rotation (8) of the rotating mass (7) can be changed in the coupled state.

4. Apparatus according to one of the preceding claims, **characterized in that** a brake, with which a braking force can be exerted on the rotating mass (7), is provided.

5. Vehicle having an apparatus (1) according to one of Claims 1 to 4 for exerting torque on the vehicle.

6. Use of an apparatus (1) according to one of Claims 1 to 4 to exert torque on a vehicle in order to stabilize a driving state of the vehicle.

7. Method for exerting torque on an object (2) by means of an apparatus (1) according to one of Claims 1 to 4, comprising the following steps:
- acquiring (S1, S7) data about a state of stability of the object by means of at least one sensor,
- determining (S2, S8) from the acquired data whether the state of stability is to be classified as critical;
**characterized by** the following steps:
- determining (S3, S9) an opposing torque to be transmitted to the object in order to stabilize the object;
- determining (S4, S10) a moment which is to be exerted on at least one of the rotating masses (7) in order to effect the desired opposing torque, and exerting (S6, S11) the moment on at least one of the rotating masses (7) if the state of stability has been classified as critical.

8. Method according to Claim 7, **characterized in that** the supporting means (4) is fixed and at least one rotating mass (7) is braked or accelerated when the state of stability has been classified as critical.

9. Method according to Claim 7 or 8, **characterized in that** in order to change the alignment of the axis of rotation (8) of at least one rotating mass (7), the position of the supporting means (4) is adjusted with the aid of a drive, on the coupling unit (5).

10. Method according to one of Claims 7 to 9, **characterized in that** the object (2) is a vehicle and the data acquired (S1, S7) about the state of stability are at least one acceleration and/or a rate of rotation and/or a steering angle and/or a wheel rotational speed.

## Revendications

1. Dispositif pour exercer un couple de rotation sur un objet (2) comprenant au moins une masse d'inertie (7) montée de manière à pouvoir tourner autour d'un axe de rotation (8) et un entraînement destiné à entraîner la masse d'inertie (7) ainsi qu'un moyen formant palier (4) destiné à supporter la masse d'inertie sur l'objet (2), lequel moyen formant palier permet de modifier l'orientation de l'axe de rotation (8) par rapport à l'objet (2), dans lequel il est prévu un moyen d'accouplement (5) venant en prise avec le moyen formant palier (4), au moyen duquel l'au moins une masse d'inertie (7) montée de manière à pouvoir tourner peut de manière sélective être accouplée à l'objet (2) ou être découplée de l'objet (2), **caractérisé en ce qu'**il est prévu au moins un corps (3) comportant six masses d'inertie (7), qui est monté par cardans à l'aide du moyen formant palier (4) par rapport à l'objet (2), dans lequel deux masses d'inertie (7) peuvent respectivement être mises en rotation autour du même axe de rotation (8) dans des directions opposées.

2. Dispositif selon la revendication 1, **caractérisé en ce que** le moyen d'accouplement (5) est conçu pour immobiliser ou libérer de manière sélective le moyen formant palier (4).

3. Dispositif selon l'une quelconque des revendications précédentes, **caractérisé en ce que** le moyen d'accouplement (5) est conçu de manière à ce que la position de l'axe de rotation (8) de la masse d'inertie (7) à l'état accouplé puisse être modifiée.

4. Dispositif selon l'une quelconque des revendications précédentes, **caractérisé en ce qu'**il est prévu un frein au moyen duquel une force de freinage peut être exercée sur la masse d'inertie (7).

5. Véhicule comportant un dispositif (1) selon l'une quelconque des revendications 1 à 4, destiné à exercer un couple de rotation sur le véhicule.

6. Utilisation d'un dispositif, (1) selon l'une quelconque des revendications 1 à 4, pour exercer un couple de rotation sur un véhicule afin de stabiliser un état de déplacement du véhicule.

7. Procédé pour exercer un couple de rotation sur un objet (2) au moyen d'un dispositif (1) selon l'une quelconque des revendications 1 à 4, comprenant les étapes suivantes :
- détecter (S1, S7) des données concernant un état de stabilité de l'objet au moyen d'au moins un capteur ;
- déterminer (S2, S8) à partir des données détectées si l'état de stabilité doit être considéré comme étant critique ;
**caractérisé par** les étapes suivantes :
- déterminer (S3, S9) un couple antagoniste devant être transmis à l'objet pour stabiliser l'objet ;
- déterminer (S4, S10) un couple qui doit être exercé sur au moins l'une des masses d'inertie (7) afin de produire le couple antagoniste souhaité, et exercer (S6, S11) le couple sur au moins l'une des masses d'inertie (7) lorsque l'état de stabilité est considéré comme étant critique.

8. Procédé selon la revendication 7, **caractérisé en ce que** le moyen formant palier (4) est fixe et **en ce qu'**au moins une masse d'inertie (7) est freinée ou accélérée lorsque l'état de stabilité est considéré comme étant critique.

9. Procédé selon la revendication 7 ou 8, **caractérisé en ce que**, pour modifier l'orientation de l'axe de rotation (8) d'au moins une masse d'inertie (7), la position du moyen formant palier (4) est ajustée à l'aide d'un mécanisme sur le moyen d'accouplement (5).

10. Procédé selon l'une quelconque des revendications 7 à 9, **caractérisé en ce que** l'objet (2) est un véhicule et **en ce qu'**une accélération et/ou une vitesse de rotation et/ou un angle de braquage et/ou une vitesse de rotation des roues est/sont détecté(s) (S1, S7) en tant que données concernant l'état de stabilité.
